# FASCICULE DE BREVET EUROPEEN

(11) **EP 1 046 006 B1**
(45) Date de publication et mention de la délivrance du brevet: **12.09.2001**
(21) Numéro de dépôt: 98958965.0
(22) Date de dépôt: 07.12.1998
(51) Int. Cl.: F16L 1/19

(54) **DISPOSITIF ET PROCEDE D'INSTALLATION DE CONDUITES A TRES GRANDES PROFONDEURS**
VERFAHREN UND VORRICHTUNG ZUM VERLEGEN VON ROHRLEITUNGEN IN GROSSER TIEFE
DEVICE AND METHOD FOR INSTALLING CONDUITS AT VERY GREAT DEPTHS

(30) Priorité: 09.01.1998 FR 9800148
(43) Date de publication de la demande: 25.10.2000
(73) Titulaire: COFLEXIP, 75116 Paris (FR)
(72) Inventeur: DE VARAX, Hervé, F-75004 Paris (FR)
(74) Mandataire: Bertrand, Didier
(86) Numéro de dépôt international: FR9802642
(87) Numéro de publication internationale: WO9935429

(56) Documents cités:
- FR-A- 2 660 402
- GB-A- 2 296 956

## Description

La présente invention concerne un dispositif et un procédé pour effectuer la pose sous l'eau de conduites tubulaires à partir d'un navire de pose.

L'homme du métier distingue les conduites flexibles et les conduites rigides. On renvoie à la spécification API 17J de l'American Petroleum Institute pour la définition des conduites flexibles ; on rappelle simplement que les conduites flexibles ont un rayon minimal de flexion sans déformation plastique relativement petit (par exemple quelques mètres) par opposition aux conduites rigides, dont le rayon minimal de flexion sans déformation plastique est relativement grand (par exemple plusieurs dizaines de mètres). De plus, pour les besoins de l'exposé ci-après, on englobera sous la désignation générale de flexibles non seulement les conduites tubulaires flexibles à proprement parler, mais également les colonnes montantes (en anglais "risers") flexibles, les ombilicaux et les câbles flexibles qu'un navire de pose peut être amené à poser.

Le document FR 2 660 402 A au nom de la demanderesse fait connaître un dispositif et un procédé de pose de conduite flexible à partir du puits central ("moon pool") d'un navire de pose. La conduite est déroulée d'un panier de stockage et envoyée sur une grande goulotte de guidage en arc de cercle (familièrement baptisée "camembert") disposée en haut d'un derrick vertical de moyenne hauteur surmontant le puits et supportant deux tensionneurs multichenilles qui serrent et déplacent la conduite de manière continue. Ce système est bien adapté aux conduites flexibles, c'est-à-dire qui peuvent prendre une courbure assez prononcée aussi bien dans le panier de stockage que sur la goulotte de renvoi et sur les portions intermédiaires du trajet en forme de chaînette. En revanche, ce système n'est pas adapté aux conduites rigides qui ne supportent pas de telles courbures ou pour lesquelles de telles courbures entraînent des déformations permanentes.

Dans le cas des conduites rigides, on connaît quatre grands types de procédés de pose.

Selon la technique de pose dite en S, on assemble horizontalement sur le pont du navire les tronçons de conduite et on leur fait suivre un trajet en S à très grand rayon de courbure de manière à empêcher toute déformation plastique. La conduite quitte le navire sous un angle très oblique, à l'aide d'une gouttière (en anglais "stinger") inclinée. Cette technique ne convient qu'aux faibles et moyennes profondeurs de pose, car sinon, le poids de la chaînette de conduite déjà posée risquerait de couder et déformer plastiquement la conduite au niveau où elle sort de la gouttière. C'est pourquoi d'autres techniques ont dû être développées pour les plus grandes profondeurs d'eau.

La technique dite de rigide déroulé (en anglais "reeled pipe system") est illustrée par exemple par le document GB 2 025 566 A, où la conduite, qui a été soudée en grande longueur (supérieure à 1 km par exemple ) à quai et enroulée avec déformation plastique autour d'une bobine située sur le navire de pose, est déroulée d'une bobine à nouveau avec déformation plastique et passe dans un redresseur avant d'être reprise par les convoyeurs à chenilles d'une rampe de pose inclinable prévue à l'arrière du navire et dont l'inclinaison est choisie en fonction de la profondeur de pose.

La technique de pose dite en G est illustrée par exemple par le document GB 2 287 518 A, dans lequel des tronçons de conduites sont assemblées horizontalement sur le pont du navire comme dans la pose en S ; la conduite formée est envoyée vers l'avant du navire puis renvoyée vers l'arrière par une large roue entraînant une déformation plastique de la conduite, après quoi celle-ci passe dans des redresseurs et une succession de tensionneurs multichenilles, puis est larguée dans l'eau sous une certaine inclinaison qui peut être choisie en fonction de la profondeur d'eau pour éviter de déformer plastiquement la conduite au niveau de la chaînette immergée.

Une variante de ce procédé est montrée dans le document GB 2 296 956 A, dont un des modes de réalisation s'apparente aux procédés de pose dits en S G et prévoit d'envoyer la conduite, préalablement assemblée par tronçons sur le pont, sur une goulotte arquée placée au sommet d'une rampe inclinable pourvue de tensionneurs ou de mâchoires de serrage ; les deux inflexions que subit la conduite entraînent des déformations plastiques de la conduite et rendent nécessaire d'utiliser des redresseurs.

Pour éviter les déformations plastiques imposées à la conduite dans les procédés de pose en G ou en rigide déroulé, des procédés de pose dits en J ont été développés, caractérisés par le fait que les tronçons de conduite sont assemblés sur une tour verticale ou peu inclinée du navire de pose, les tronçons étant ainsi soudés les uns aux autres dans la direction de pose de la conduite, ce qui évite toute déformation plastique à ce stade, la conduite assemblée étant ensuite immergée en grande profondeur, toujours sans déformation plastique. Un exemple est illustré dans le document US 5 464 307 A montrant un dispositif pour effectuer la pose de conduites tubulaires, à partir du puits central d'un navire de pose, le dispositif comprenant une tour inclinable, disposée dans et essentiellement sur une grande hauteur au-dessus du niveau du puits central, agencée pour y disposer une certaine longueur de conduite à poser, et des moyens de serrage et de déplacement de ladite longueur de conduite. Selon ce document toutefois la tour supérieure est une tour d'alignement de conduite, constituée d'une structure légère car elle ne doit supporter que le poids d'un tronçon de conduite ; elle se prolonge sous le niveau du puits par une importante tour de support sur laquelle sont prévus lesdits moyens de déplacement, constitués par un chariot mobile retenant la conduite au niveau d'une bride d'arrêt de celle-ci. Les interventions éventuellement nécessaires sur ce dispositif sont rendues compliquées par le fait qu'il est en grande partie immergé.

Dans une variante du procédé ci-dessus, divulguée par McDermott Marine Construction lors de la Offshore Technology Conference tenue à Houston (Etats-Unis) en 1994, le chariot mobile retenant la conduite peut se déplacer au long de la tour supérieure. Toutefois, comme dans l'autre version du procédé, la conduite est retenue sur le chariot par une bride d'arrêt s'appuyant sur un bloc de support du chariot. De telles brides ne sont pas nécessairement présentes sur tous les types de conduites. Même quand une conduite comprend des brides limiteuses de flambement ("buckle arrester") soudées de place en place, celles-ci ne peuvent être utilisés pour soutenir tout le poids de la conduite sans un renforcement de leur soudure, habituellement assez légère, puisqu'elle doit alors résister à des forces de cisaillement élevées exigeant une soudure pénétrante ; il en résulte un coût élevé de préparation de la conduite.

Le but de l'invention est de proposer un nouveau dispositif de pose de conduite, et son procédé associé, qui ne présente pas les inconvénients de l'art antérieur, et soit particulièrement bien approprié à la pose de conduites rigides en très grandes profondeurs (par exemple jusqu'à environ 3000m et une charge maximale de l'ordre de 600 tonnes), tout en permettant aussi la pose de conduites flexibles.

Le dispositif de l'invention est globalement de la famille des dispositifs de pose en J. Il comprend une tour inclinable, disposée dans et essentiellement sur une grande hauteur au-dessus du niveau du puits central, agencée pour y recevoir une certaine longueur de conduite à poser, et des moyens de retenue et de déplacement de ladite longueur de conduite ; lesdits moyens comprennent au moins deux chariots mobiles capables de parcourir ladite hauteur de la tour, et susceptibles de recevoir des organes de retenue de conduite. Ces organes de retenue sont très avantageusement des organes à mâchoires de serrage (en anglais "clamps"). On entend distinguer ici un tel dispositif de serrage vrai (et statique) d'un tensionneur linéaire à chenilles (impliquant un déplacement simultané au serrage). Ce dernier a généralement une longueur totale beaucoup plus importante (par exemple 15m pour les forces de traction en jeu ici) que celle d'un dispositif de serrage du type "clamp" (par exemple 4m). Par la commande du serrage des "clamps" et le déplacement de l'un ou de l'autre des chariots le long de la tour, il est possible d'utiliser le dispositif de l'invention dans un grand nombre de configurations possibles, donnant au dispositif une grande versatilité. La tour de support est construite pour pouvoir supporter le poids de toute la conduite déjà immergée qui peut s'y trouver suspendue. Quoique les mâchoires de serrage soient le dispositif de retenue préféré, il n'est pas exclu pour des applications particulières d'utiliser les chariots mobiles pour recevoir des blocs d'appui coopérant avec des brides de retenue de la conduite. De plus, il est également avantageux que la tour puisse recevoir des dispositifs tensionneurs à chenilles, ce qui permet de l'utiliser dans des configurations nombreuses pour la pose de flexible, les chariots étant alors généralement relégués en haut de la tour.

Les chariots sont motorisés individuellement et entraînés par exemple par un système pignon-crémaillère le long de la tour inclinable, de manière qu'ils puissent se déplacer en supportant tout le poids de la chaînette de conduite immergée.

La soudure entre tronçons successifs est avantageusement faite au niveau du pont, ainsi que les opérations de contrôle non-destructif et de revêtement de la conduite au niveau des soudures. Pendant ces opérations, le tronçon supérieur est retenu par le chariot supérieur ou par des organes auxiliaires prévus sur la tour ou sur le dispositif qui a servi à amener ledit tronçon en place, tandis que le chariot inférieur retient la chaînette immergée.

Avantageusement, en vue d'augmenter les possibilités d'application du dispositif de l'invention, la tour comporte à son extrémité supérieure une roue de renvoi de flexible montée sur une console immobilisée sur la tour. Il ne s'agit plus ici d'une vaste goulotte destinée à guider une conduite moyennement souple, mais d'une roue de renvoi pour véritable flexible.

Avantageusement, la console de la roue est montée de façon déplaçable sur la tour et peut être immobilisée à différentes hauteurs, ce qui, on le verra plus loin, diversifie encore les applications.

De façon connue, la tour comporte de préférence un treuil et un câble de service, ou mieux un treuil double et deux câbles, facilitant de nombreuses manipulations.

Avantageusement, la hauteur de tour au-dessus du puits central est composée d'au moins deux sections démontables. Dans certains cas, on peut démonter ces sections et en utiliser l'une d'elles sur un autre navire.

La hauteur de la tour au-dessus du pont du navire est par exemple de l'ordre de 50m ou plus, permettant de monter des tronçons de conduites formées de quatre segments assemblés (usuellement 48,8m). En fonction des possibilités du bateau et de sa stabilité, on peut modifier ce nombre de quatre tronçons.

Selon une caractéristique importante de l'invention, la tour comprend sur toute sa longueur au-dessus du puits central un chemin de roulage et elle est associée à un dispositif d'amenée d'un tronçon de conduite sur la tour, ce dispositif comprenant un châssis allongé muni de roues susceptibles de rouler d'une part sur le pont du navire de pose et d'autre part sur ledit chemin de roulage le long duquel il est hissé par les câbles Lreuillés ou d'autres dispositifs auxiliaires.

Avantageusement, la tour est associée à une table de travail escamotable, inclinable avec elle, et capable de supporter le poids de la conduite immergée.

La tour comprend à sa partie inférieure une boîte à rouleaux ("roller box") montée sur un châssis articulé ou rétractable.

Le procédé de l'invention utilise le dispositif précédent, dans diverses configurations.

Ainsi, pour la pose de conduites rigides, on utilise en pas-à-pas les deux chariots pour saisir et descendre successivement des tronçons de conduite. Le chariot supérieur est le seul chariot mobile, parcourant toute la hauteur de la tour, avec à la descente tout le poids de la chaînette de conduite immergée, tandis que le chariot inférieur est statique en bas de la tour et ne sert qu'à retenir la chaînette de conduite quand elle n'est pas serrée dans le chariot supérieur.

Avantageusement, on remonte les deux chariots en haut de la tour pour installer un connecteur terminal en queue de ligne, ou d'autres accessoires tels que manifolds ou modules de flottage. Les opérations de pose du connecteur terminal et de maintien de la conduite immergée sont facilitées par la présence d'un couvercle ou table de travail escamotable au-dessus du puits central autour de la conduite, ce couvercle étant conçu pour supporter le poids de ladite conduite immergée qu'on y fixe provisoirement.

Selon l'invention, on peut utiliser la roue de la tour à pleine hauteur ou à mi-hauteur pour poser un flexible, le cas échéant à l'aide de tensionneurs adaptés sur la partie inférieure de la tour.

On peut aussi n'utiliser qu'une partie seulement de la tour, sur un navire conventionnel, pour poser une conduite flexible.

D'autres caractéristiques et avantages de l'invention apparaîtront à la lecture de la description suivante de plusieurs exemples de réalisation, se référant aux dessins annexés sur lesquels :
- les figures 1 et 2 sont des vues respectivement latérale et de dessus d'un navire poseur équipé du dispositif de pose conforme à l'invention,
- les figures 3 et 4 sont des vues respectivement de face et latérale du dispositif de l'invention dans sa version principale,

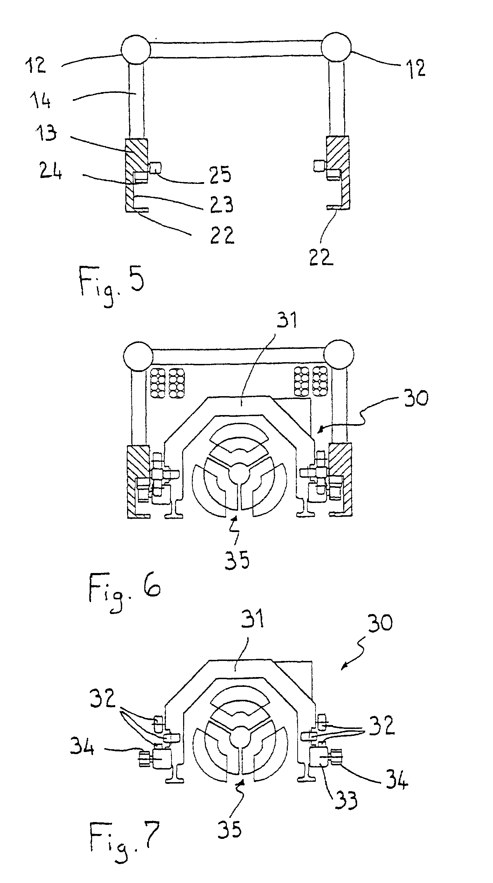

- les figures 5, 6, et 7 sont des coupes transversales respectivement de la tour seule du dispositif, de la tour et du chariot de serrage, et du chariot de serrage seul,
- la figure 8 est une vue latérale du dispositif de l'invention et du châssis d'amenée de tronçons de conduite sur ledit dispositif,

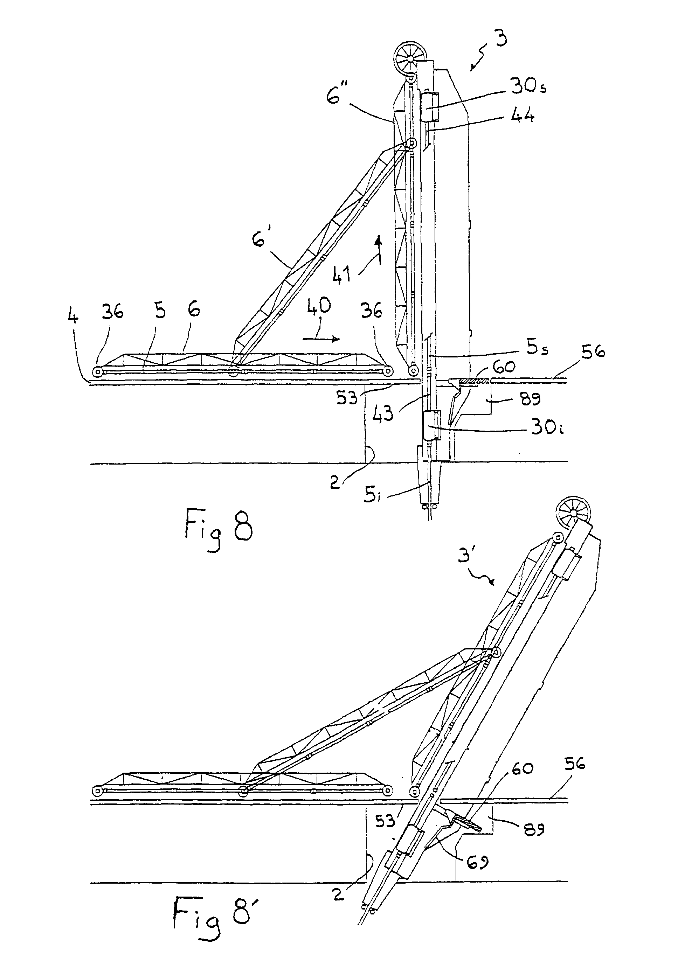

- la figure 8' est une vue analogue à la figure 8 pour une position inclinée de la tour,

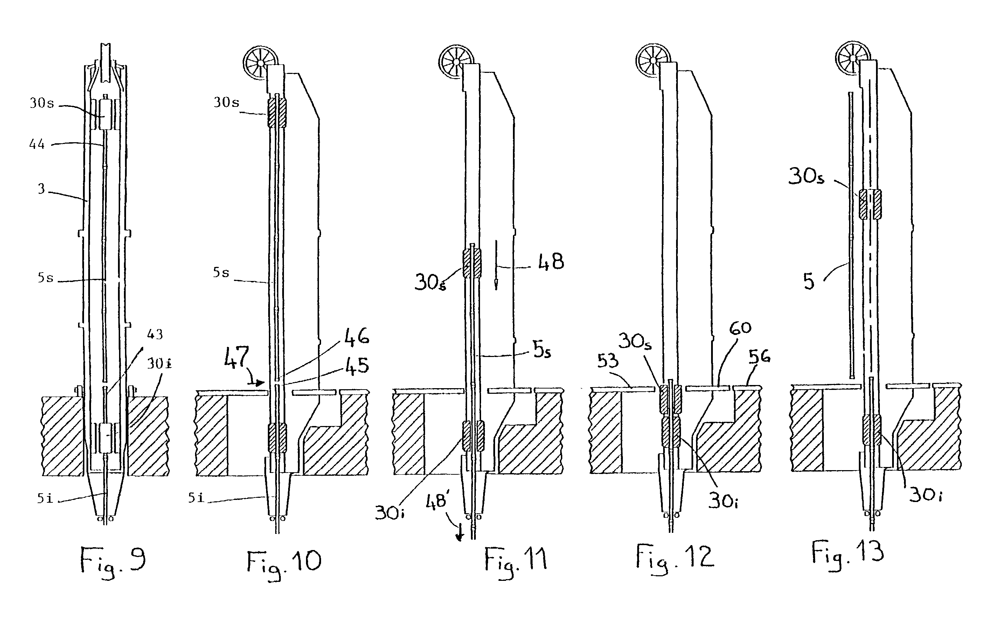

- la figure 9 est une vue de face du dispositif de l'invention à une première étape du procédé de mise en place de conduite rigide,
- les figures 10, 11, 12, et 13 montrent en vue latérale quatre étapes successives d'un procédé de mise en place de conduite rigide,

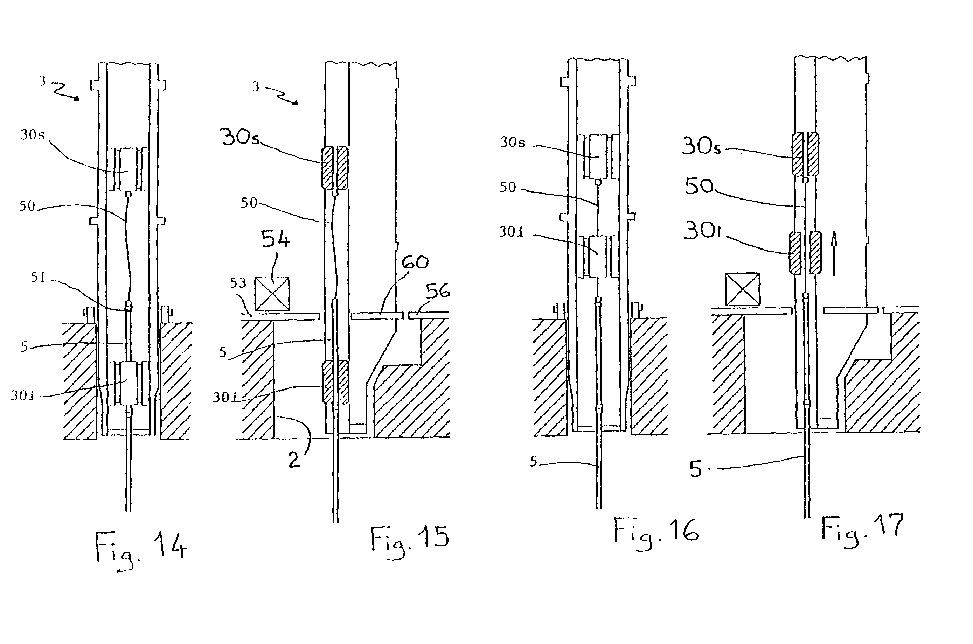

- les figures 14 et 15, 16 et 17, 18 et 19, 20 et 21, 22 et 23, et 24 et 25 montrent en vues respectivement de face et latérales, six étapes d'installation d'une terminaison de connecteur dans le dispositif de l'invention,

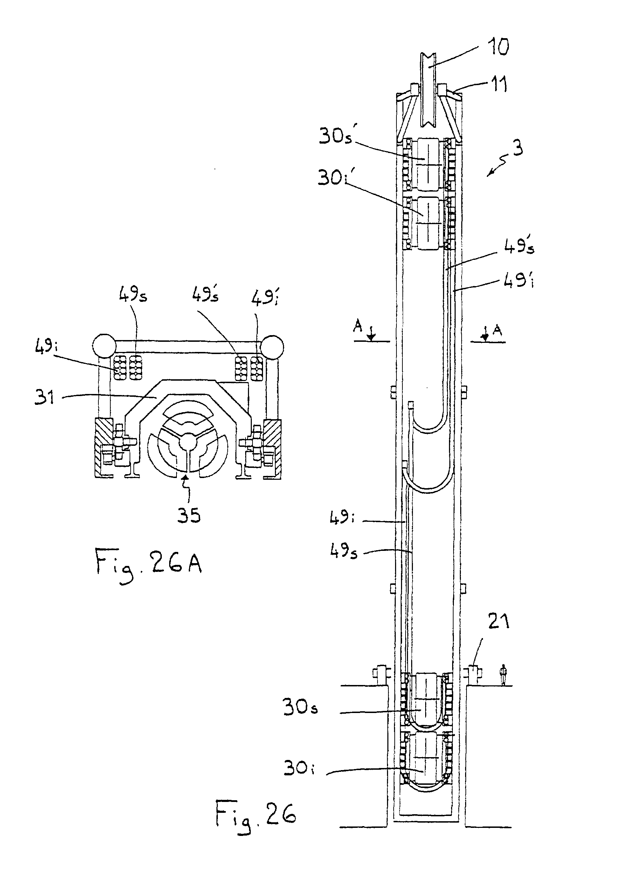

- les figures 26 et 26A montrent en vue arrière et coupe transversale A-A un exemple d'agencement des faisceaux de câbles de connexion des chariots,

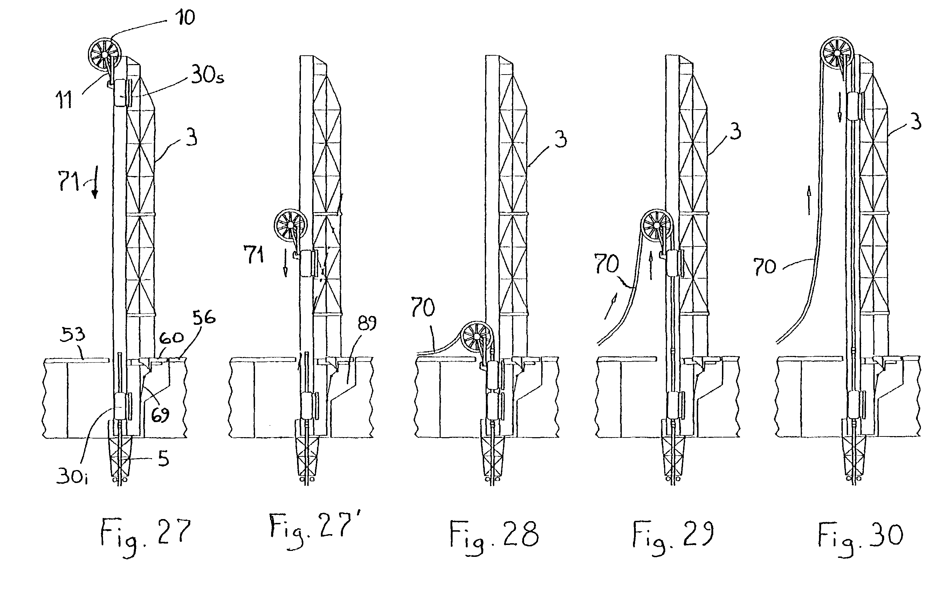

- les figures 27, 27', 28, 29 et 30 montrent en vues latérales cinq étapes d'une utilisation du dispositif de l'invention pour la pose de connexions flexibles intermédiaires ou pour le déploiement d'un flexible suiveur de conduite,

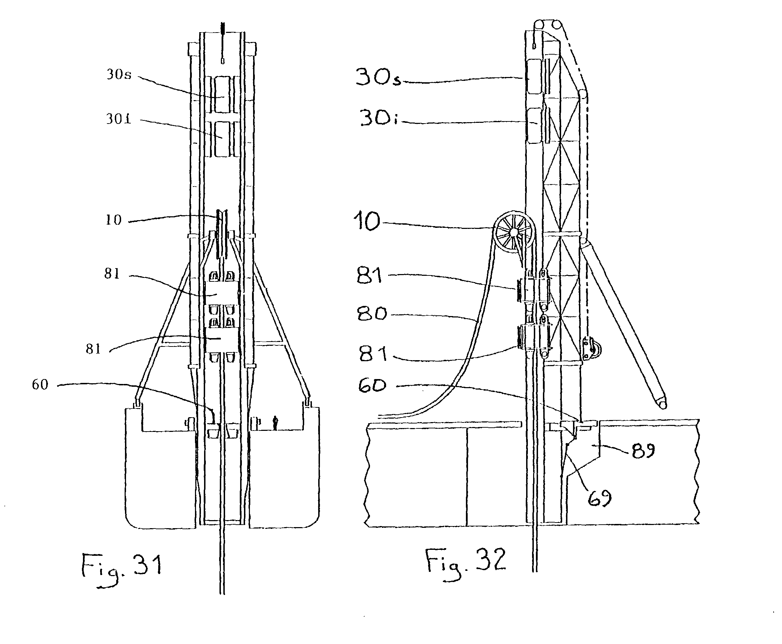

- les figures 31 et 32 montrent en vue respectivement de face et latérale une utilisation du dispositif de l'invention pour la pose de flexible en très grande profondeur,

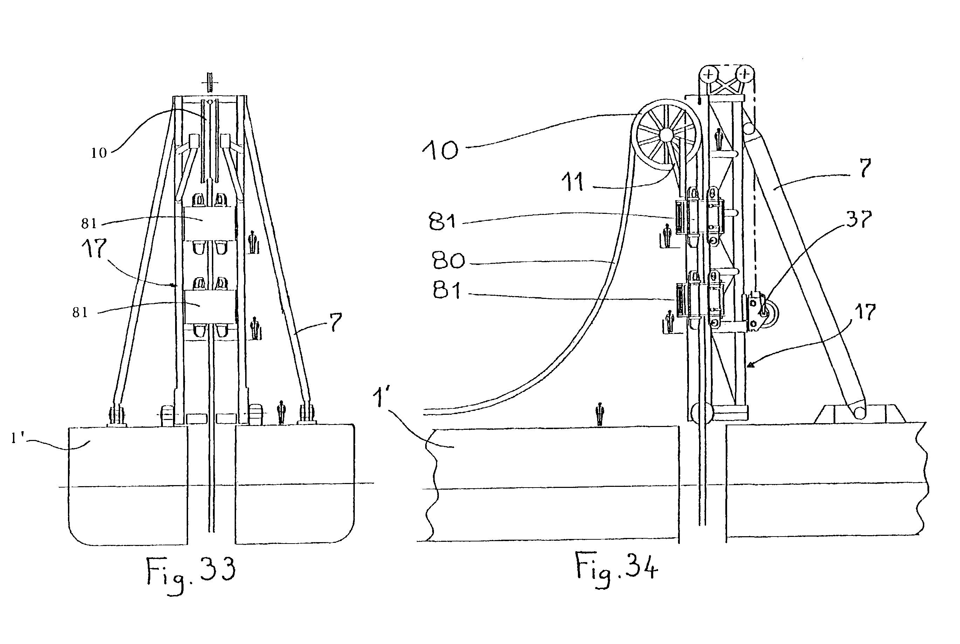

- les figures 33 et 34 montrent en vue respectivement de face et latérale une utilisation d'une portion du dispositif de l'invention pour la pose de flexibles en moyenne profondeur sur navire classique,

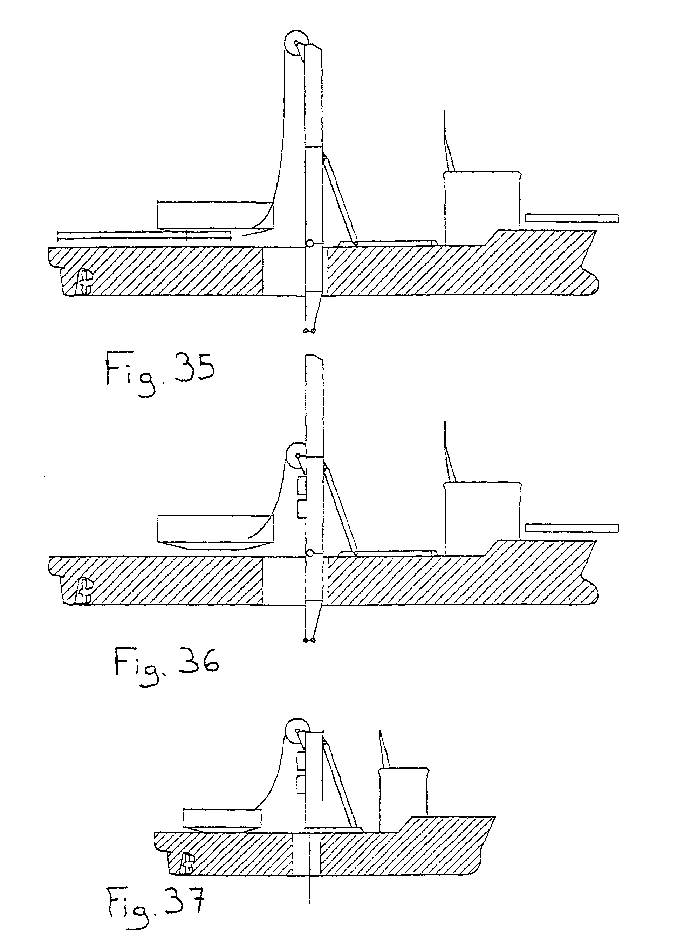

- les figures 35, 36 et 37 sont des schémas résumant diverses possibilités d'utilisation du dispositif de l'invention,

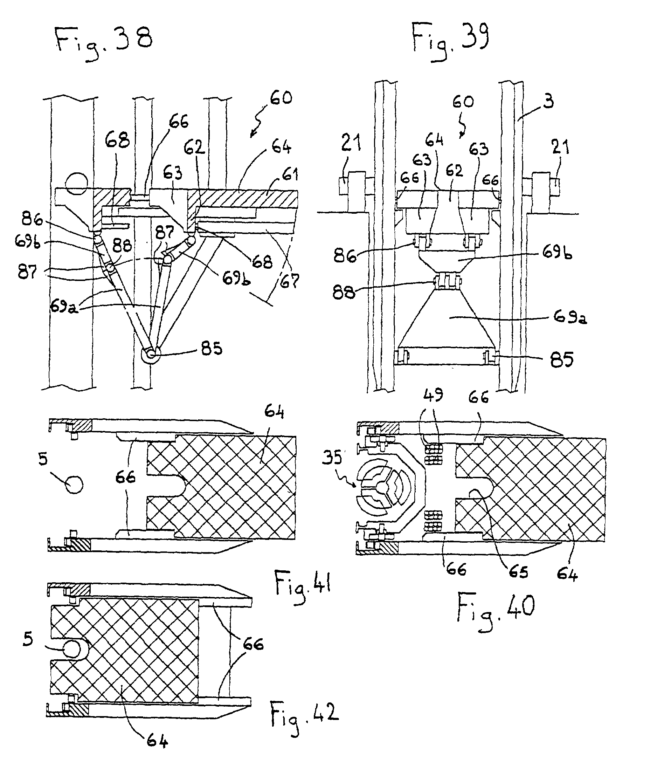

- les figures 38 et 39 montrent le détail de la table de travail escamotable prévue au pied de la tour, respectivement en vue et coupe latérale, et en vue arrière,
- les figures 40, 41 et 42 montrent en vue de dessus la table de travail en position ouverte avec passage d'un chariot, en position ouverte avec passage d'un tronçon de conduite et en position fermée avec passage d'un tronçon de conduite.

Le navire poseur 1 comprend vers son milieu un puits central traversant 2 d'assez grandes dimensions, par exemple 14m de longueur, pour permettre le logement et l'inclinaison de la partie inférieure d'une tour 3 élevée principalement en superstructure et constituant le dispositif essentiel de l'invention. Sur le pont arrière 4 sont stockés des tronçons de conduite assemblés (par exemple par groupes de quatre sections) et destinés à être amenés par un châssis de relevage 6 en position verticale ou inclinée sur la tour 3. La tour 3 est articulée au voisinage de sa base et soutenue à l'avant de la tour (en considérant le sens du bateau) par deux étais articulés 7 dont les pieds 8 coulissent dans deux rails parallèles 9 disposés sur le pont. Des moyens de motorisation non représentés permettent de déplacer les pieds des étais 7, et de faire pivoter la tour 3 autour de son articulation basse, de manière à la placer au choix dans une position purement verticale ou une position inclinée (par exemple jusqu'à 30°, compte tenu de l'utilisation envisagée pour la pose en eaux profondes), comme représenté en 3'. La tour 3 porte à son extrémité supérieure une roue 10 tournant sur un axe porté par une console 11 montée de manière à pouvoir se déplacer et s'immobiliser le long de la tour 3.

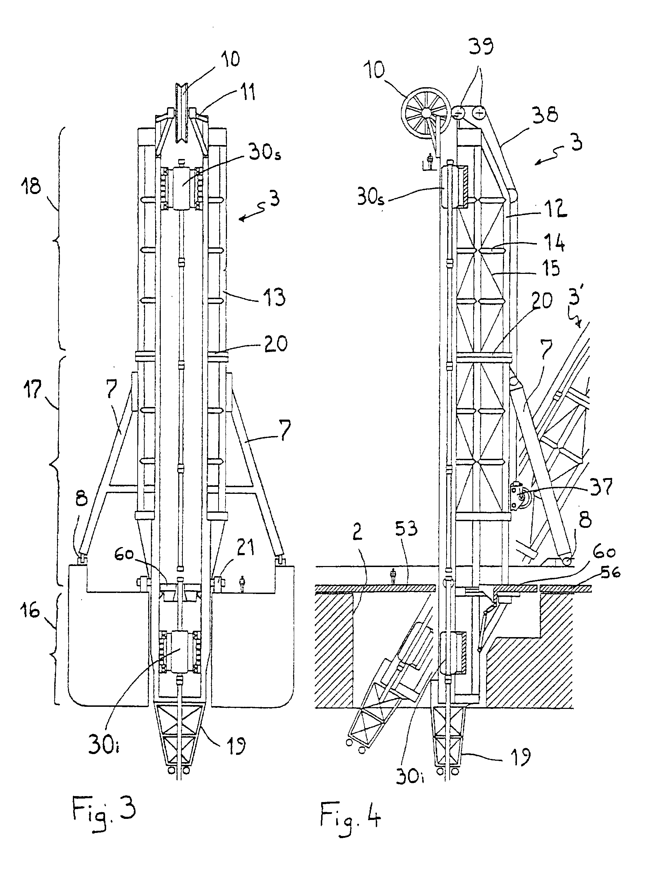

Les figures 3 et 4 montrent plus en détail la structure de la tour 3. Elle est formée de plusieurs sections composées chacune par exemple d'une structure en treillis comportant des colonnes arrière 12 et des colonnes avant 13, reliées par des barres horizontales 14 et des entretoises obliques 15. L'homme du métier connaît bien ces structures qu'il est inutile de décrire plus en détail et on pourra se reporter aux documents US 5 464 307 A et GB 2 025 566 A déjà mentionnés. La tour comprend de préférence trois sections ; une courte section inférieure 16, par exemple d'une hauteur de 12 m, soit sensiblement la hauteur du trou de pose 2, puis deux sections de même hauteur respectivement centrale 17 et supérieure 18, atteignant chacune par exemple 27 m, donc donnant une hauteur totale de tour en superstructure de 54m.

Au pied de la tour 3 est installée la boîte à rouleaux 19, qui la prolonge encore vers le bas d'une douzaine de mètres, mais qui ne fait pas partie de la tour à proprement parler, et notamment ne comprend pas la rampe qui va être décrite plus loin. La boîte à rouleaux 19 sert de manière connue à contrôler les écarts excessifs d'inclinaison de la conduite immergée. Les sections 16, 17, 18 sont attachées au niveau de ceintures d'assemblage 20. L'articulation 21 de la tour 3 est prévue sensiblement au niveau de la jonction entre les deux sections 16 et 17, c'est-à-dire sensiblement au niveau du pont supérieur.

La tour a une section globalement en U ou en A, c'est-à-dire avec une ouverture formée sur sa face arrière entre deux ailes latérales. A l'arrière de la tour 3, les colonnes 13 ne sont pas tubulaires mais formées par exemple par des profilés à section rectangulaire comportant une face de roulage arrière 22, une large cavité rectangulaire intérieure 23 dans une face avant de laquelle est disposée une crémaillère longitudinale 24. De plus, sur la face latérale intérieure du profilé 13 est fixé un rail longitudinal 25 dirigé vers l'intérieur de la tour 3, le champignon du rail ayant par exemple trois faces de roulage et un système de raidissement de la structure étant prévu comme cela est bien connu de l'homme du métier.

Deux chariots identiques 30, destinés à supporter et déplacer les organes de retenue, comportent un châssis 31 globalement en U ouvert à l'arrière. Sur les ailes du U sont prévus des trains de trois galets de guidage 32 orientés pour prendre appui sur les trois faces de roulage des rails 25. Deux dispositifs de motorisation 33 entraînent un pignon 34 qui engrène dans la crémaillère 24 des profilés 13.

Pour éviter d'avoir à rigidifier excessivement la structure ouverte de la tour, il est possible d'utiliser des chariots dont au moins certains galets de guidage s'appuient sur des faces de roulage disposées de manière que les forces d'appui soient dirigées vers l'intérieur de la structure en U ou en A.

Les chariots 30 représentés portent un dispositif de serrage 35, par exemple du type mandrin de serrage à trois mâchoires contrôlables.

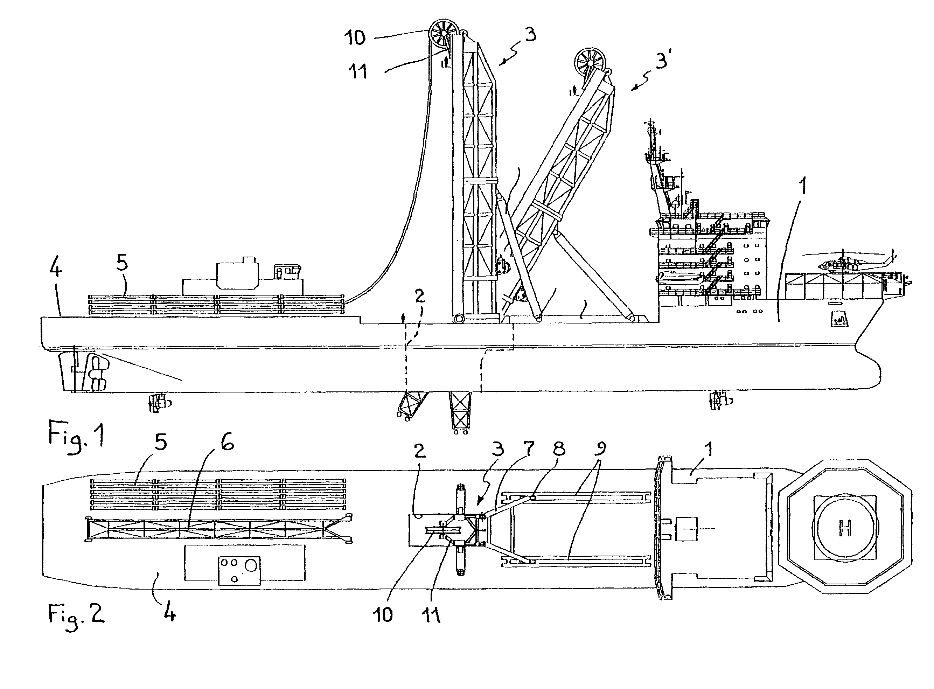

La figure 8 montre la mise en place à l'aide du châssis 6 d'un tronçon 5 de conduites préassemblées sur le pont 4 (figure 2). Le châssis 6 est une structure porteuse légère en treillis métallique, de longueur sensiblement égale au tronçon à mettre en place et donc aussi à la structure supérieure de la tour 3, et équipée de roues 36 capables de rouler d'une part sur le pont 4 et d'autre part sur les faces de roulage 22 à l'arrière des profilés 13 de la tour 3. Un tronçon 5 ayant été chargé sur le châssis 6, celui-ci est roulé (flèche 40) jusqu'au pied de la tour 3, puis hissé (flèche 41) le long des profilés avant de celle-ci à l'aide de treuils auxiliaires ou d'autres dispositifs disposés sur la tour 3 et non représentés (Le gros double treuil représenté par la référence 37 avec ses câbles appropriés 38 renvoyés au sommet de la tour par des poulies 39 sert notamment pour treuiller le flexible d'abandon). Le châssis 6 passe donc d'une position horizontale à une position verticale 6" par l'intermédiaire de positions obliques 6'. On a représenté sur la figure 8 la tour 3 en position verticale, mais on peut amener de la même manière le châssis 6 sur la tour en position inclinée 3', comme montré sur la figure 8'.

Les deux chariots 30, respectivement supérieur 30s et inférieur 30i, ont été mis en place de la façon suivante (figures 8, 9, et 10) : le chariot inférieur 30i est descendu dans la section inférieure de la tour 3 et serre et retient l'extrémité supérieure 43 du dernier tronçon 5i de la conduite déjà posée ; le chariot supérieur 30s a été amené à la partie supérieure de la tour 3 de manière à pouvoir recevoir, serrer et maintenir l'extrémité supérieure 44 du nouveau tronçon 5s de conduite qui vient d'être amené par le châssis 6. Dans cette phase donc, le tronçon inférieur 5i est retenu sous le navire par le dispositif de serrage inférieur 30i, et le tronçon supérieur 5s est retenu au-dessus du tronçon 5i par le dispositif de serrage supérieur 30s (ou par tout autre dispositif auxiliaire de positionnement et de maintien). Dans cette position, les extrémités en regard des tronçons 5i, 5s peuvent être raboutées et soudées, et la continuité du revêtement peut être assurée. Ces opérations se font au niveau de la flèche 47, c'est-à-dire au niveau du pont du navire.

La suite des opérations est représentée sur les figures 11, 12 et 13. Une fois les tronçons 5i et 5s solidaires, le dispositif de serrage inférieur 30i est ouvert, toute la charge de la conduite posée étant alors suspendue au dispositif de serrage supérieur 30s, toujours fermé. Le chariot 30s est déplacé vers le bas (flèche 48, figure 11) ce qui fait descendre toute la conduite (flèche 48'), jusqu'à ce que le chariot 30s atteigne sa position la plus basse (figure 12) juste au-dessus du chariot inférieur 30i. Les organes de serrage du chariot 30i sont alors fermés et ceux du chariot 30s sont ouverts. La conduite posée est alors à nouveau suspendue par le chariot inférieur 30i, et le chariot 30s est libre de remonter, ouvert, en haut de la tour 3 (figure 13) pour recevoir le nouveau tronçon 5 amené par le dispositif 6.

Ces étapes se répètent jusqu'à la pose de toute la conduite.

Des étapes spéciales sont prévues pour la pose d'un connecteur terminal, étapes qui requièrent la mobilité des deux chariots 30i et 30s et sont illustrées sur les figures 14 à 25.

Une fois posé le dernier tronçon 5, maintenu par le chariot inférieur 30i, le chariot supérieur 30s est remonté de quelques mètres et une élingue 50 résistante à la traction de toute la ligne (par exemple 600 tonnes) est installée entre ledit chariot 30s et la tête 51 du tronçon 5 qui a été préalablement équipée d'un anneau d'accrochage. Ces opérations sont facilitées par le fait qu'après la remontée du chariot supérieur 30s, on a fermé le trou 2 par un couvercle de travail coulissant 53 d'une part et par une table de travail escamotable 60 à découpe centrale laissant passer la conduite. Le couvercle 53 est suffisamment résistant pour supporter des charges, telles que le connecteur 54, et la table de travail 60 doit pouvoir supporter le poids de toute la conduite suspendue comme on le verra plus loin.

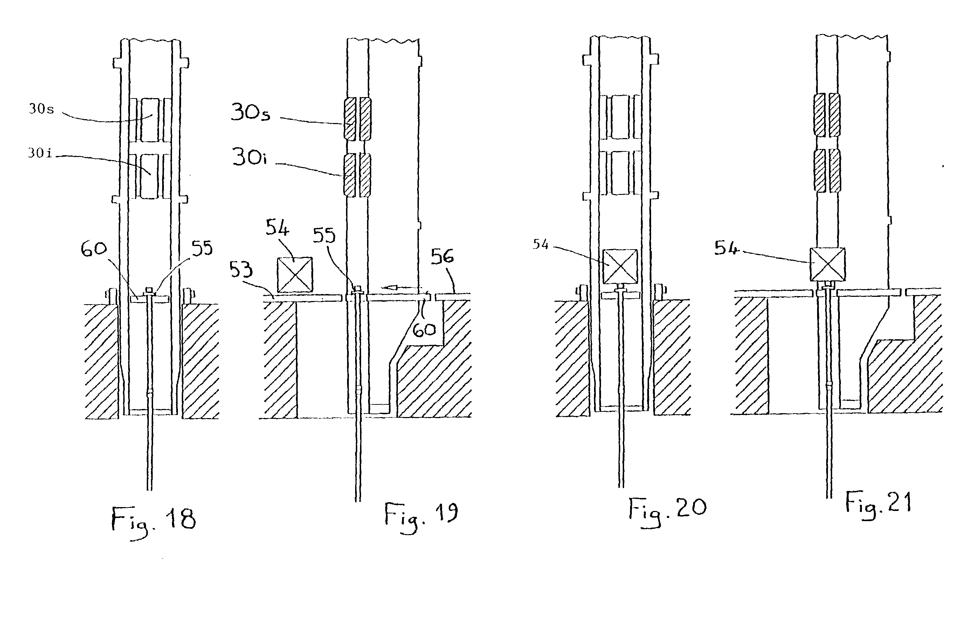

Le serrage du chariot inférieur 30i est alors ouvert (ce qui fait que tout le poids de la conduite suspendue passe dans l'élingue 50 et est supporté par le chariot 30s) et ledit chariot monte sur la tour 3 pour rejoindre sensiblement le chariot supérieur 30s (figures 16 et 17).

Les deux chariots étant alors en position élevée, on peut fermer complètement le couvercle 53 et la table 60 qui vient entourer l'extrémité 51 de la conduite dont la bride est retenue par un collier d'appui 55 reposant sur la table 60 (figures 18 et 19). On peut alors retirer l'élingue 50 et la poulie qui équipait la tête 51, et venir installer le connecteur terminal 54. (figures 20 et 21).

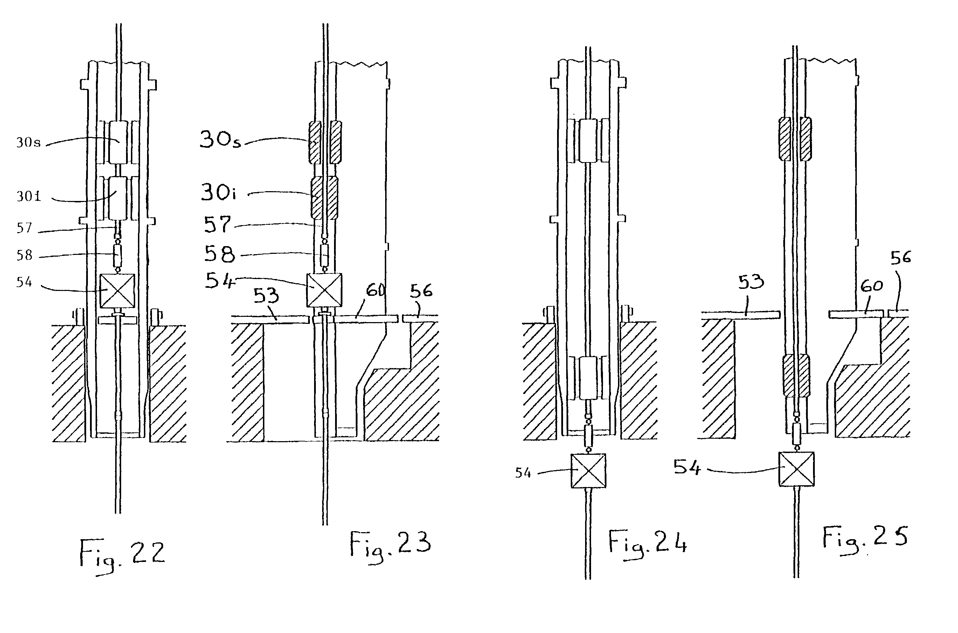

On passe alors le flexible d'abandon 57 (on peut se référer au document FR 2 660 403 de la demanderesse à ce sujet) dans les deux chariots 30i et 30s (figures 22 et 23) puis on installe entre le connecteur 54 et le flexible d'abandon 57 le dispositif 58 de largage automatique. Le serrage du chariot inférieur 30i est alors fermé, celui-ci supportant toute la charge de la conduite suspendue.

Les couvercles 53 et 56 sont alors partiellement réouverts (figures 24 et 25), et la boîte à rouleaux 59 (laquelle peut être identique à la boîte 19 représentée sur les figures 3 et 4) est ouverte. Le chariot inférieur 30i peut alors descendre, jusqu'à ce que le connecteur 54 traverse puis dépasse la boîte à rouleaux qu'on peut alors refermer. Les opérations usuelles d'abandonnement peuvent être entamées. On décrira plus loin, en relation avec les figures 38 à 42, un mode de réalisation détaillé de la table de travail 60.

Les figures 26 et 26A illustrent un mode de réalisation de la connectique des chariots inférieur 30i et supérieur 30s. Les faisceaux flexibles respectifs 49i et 49s sont suspendus entre un point fixe respectif de connexion sensiblement à mi-hauteur de la colonne 3 et le dessous d'un chariot respectif inférieur 30i ou supérieur 30s. On a représenté sur la même figure 26 les deux chariots 30i, 30s ramenés en position basse et connectés par les faisceaux en position 49i, 49s et les deux chariots 30'i, 30's en position haute et connectés par les faisceaux en positions haute 49'i, 49's. Les faisceaux, comme le montre la figure 26A, peuvent facilement trouver de la place dans la structure de la tour 3, par exemple dans les angles intérieurs avant de la tour.

Les figures 27 à 30 illustrent une utilisation de la tour 3 et de ses accessoires pour la mise en place d'un flexible de connexion intermédiaire sur la tête de ligne 5, laquelle est retenue par le chariot inférieur 30i. Le chariot supérieur 30s est disposé en haut de la tour 3 et la roue 10 avec sa console 11 sont solidarisées audit chariot 30s. Le chariot 30s est alors abaissé (flèche 71, figures 27 et 27') avec la roue 10 jusqu'à un niveau inférieur (figure 28), ce qui permet de passer le flexible 70 sur la roue et de réaliser la connexion du flexible sur la tête de conduite 5. Les moyens de serrage du chariot supérieur 30s étant maintenus ouverts et ceux du chariot inférieur 30i fermés, le chariot 30s peut s'élever librement (figure 29) et entraîner la roue 10 et le flexible jusqu'à la position supérieure (figure 30) dans laquelle la console de la roue 10 est immobilisée. Le serrage du chariot supérieur 30s est alors fermé et celui du chariot inférieur 30i est ouvert, ce qui permet en descendant le chariot supérieur 30s de descendre une section de flexible ; on ferme alors le serrage du chariot inférieur 30i et on ouvre celui du chariot supérieur 30s qui peut ainsi remonter en haut de la tour 3. L'opération peut se répéter autant de fois que nécessaire pour dévider la longueur de flexible voulue.

Les figures 31 et 32 illustrent une possibilité d'utilisation supplémentaire de la tour de l'invention pour poser du flexible 80 en eau profonde, le flexible étant déroulé d'une bobine disposée sur le pont et non représentée. Pour cette utilisation, la roue 10 est installée à mi-hauteur de la tour 3. Les chariots 30i et 30s sont relégués en haut de la tour 3, et on installe à poste fixe sur la section centrale de la tour 3 deux tensionneurs 81 multichenilles (par exemple trichenilles dimensionnés pour pouvoir venir s'installer dans la partie ouverte de la tour 3) permettant de poser le flexible 80 en continu (contrairement à la pose pas-à-pas à l'aide des chariots de serrage 30s, 30i).

Les figures 33 et 34 illustrent une utilisation d'une partie du dispositif de l'invention sur un navire conventionnel. Dans ce cas, on n'utilise que la section centrale 17 de la tour 3, que l'on monte sur le pont d'un navire conventionnel 1'. La roue 10 est montée sur cette section et des tensionneurs 81 analogues à ceux illustrés sur les figures 31 et 32 sont montés sur la section 17 de manière à pouvoir effectuer la pose de flexible en continu.

Les principales possibilités d'utilisation du dispositif de l'invention sont résumées sur les figures 35 à 37, La figure 35 montre un navire de pose en très grande profondeur, équipé de la tour complète, permettant la pose de conduites rigides ou flexibles (dans le cas de la version représentée, utilisant la roue de renvoi), par un système de serrage et descente pas-à-pas (avec des pas d'environ 40m) à l'aide des deux chariots de serrage de l'invention. Ce système est destiné à des profondeurs allant jusqu'à 3000m.

La figure 36 montre un navire de pose en très grande profondeur, équipé de la tour complète mais employée à mi-hauteur pour dévider un flexible, à l'aide de tensionneurs complémentaires permettant la pose en continu. Ce système est destiné à des profondeurs allant jusqu'à 1500m.

La figure 37 montre un navire classique sur lequel on a monté la partie inférieure seulement de la tour de l'invention, avec la roue et les tensionneurs, pour poser en mode continu un flexible. Là aussi, ce système est destiné à des profondeurs allant jusqu'à 1500m.

Les figures 38 à 42 décrivent en détail un mode de réalisation préféré d'une table de travail 60 escamotable et inclinable associée aux couvercles coulissants 53 et 56 disposés à l'arrière et à l'avant du puits central 2. La table 60, dépendante de la tour 3 et inclinable avec elle, consiste en une structure coulissante composée d'un robuste plateau 61 à l'arrière duquel un rebord 62 soutient deux prolongements 63 en console, le tout étant recouvert d'une surface de travail 64, de manière à former un plan de travail comprenant à l'arrière une encoche 65 destinée au passage de la conduite 5. La table 60 coulisse sur des glissières latérales solidaires de la structure de la tour 3. Un vérin 67 dont le cylindre est solidaire de la structure de la tour 3 a sa tige 68 attachée au rebord 62 du plateau de la table et peut donc faire passer la table d'une position escamotée à une position de fermeture et inversement. Dans la position escamotée ou ouverte (figures 40 et 41), la table laisse totalement le passage notamment aux chariots 30 (figure 40) ou au connecteur 54 (comme on l'a vu à la figure 23), ou a fortiori à la conduite 5 (figure 41). Dans sa position refermée (figure 42) la table laisse juste le passage de la conduite 5 grâce à l'encoche 65. Compte tenu du fait que sur les côtés de la tour 3, la présence des rails de guidage et le passage des chariots empêchent de disposer les glissières 66 assez loin en arrière jusqu'au niveau de la conduite, et que la table refermée se trouve dans cette région là en porte-à-faux, on a prévu une jambe de force articulée 69 de soutien au niveau du rebord 62. La jambe de force 69 est constituée de deux sections articulées 69a et 69b encre elles en 88 et articulées respectivement sur un axe inférieur 85 lié à la tour 3 et un axe supérieur 86 lié au rebord 62. Des secteurs de blocage 87 sont prévus sur l'articulation 88 des sections 69a, 69b pour bloquer la jambe 69 droite lorsque la table est en position fermée ; la jambe de force 69 assure que la table est suffisamment résistante pour pouvoir supporter la charge de la conduite suspendue dans la région en porte-à-faux de la manière expliquée en liaison avec les figures 18 et suivantes.

Comme le montre la figure 8', la table de travail suit l'inclinaison de la tour 3. Pour permettre cette inclinaison, le puits central 2 peut être agrandi par un volume de dégagement 89. Lorsque la table 60 est ouverte et que la tour 3 est verticale, la table 60 recouvre ce volume ; lorsque la table 60 est fermée (figure 23) et/ou lorsque la tour est inclinée (figure 8'), le couvercle auxiliaire 56 est tiré pour couvrir le volume 89.

## Revendications

1. Dispositif pour effectuer la pose de conduites tubulaires à partir du puits central (2) d'un navire de pose, le dispositif comprenant une tour inclinable (3), disposée dans et essentiellement sur une grande hauteur au-dessus du niveau du puits central (2), agencée pour y recevoir une certaine longueur de conduite (5) à poser, et des moyens de retenue et de déplacement de ladite longueur de conduite,
**caractérisé en ce que** lesdits moyens comprennent au moins deux chariots mobiles (30i, 30s) capables de parcourir ladite hauteur de la tour, et susceptibles de recevoir des organes (35) de retenue de conduite.

2. Dispositif selon la revendication 1, **caractérisé en ce que** les organes (35) de retenue de conduite sont des organes à mâchoires de serrage.

3. Dispositif selon l'une quelconque des revendications précédentes, **caractérisé en ce que** la tour (3) peut recevoir des dispositifs tensionneurs complémentaires (81).

4. Dispositif selon l'une quelconque des revendications précédentes, **caractérisé en ce que** la tour (3) comporte à son extrémité supérieure une roue (10) de renvoi de flexible montée sur une console (11) immobilisée sur la tour (3).

5. Dispositif selon la revendication 4, **caractérisé en ce que** la console (11) est montée de façon déplaçable sur la tour (3) et peut être immobilisée à différentes hauteurs.

6. Dispositif selon l'une quelconque des revendications précédentes la hauteur de tour (3) au-dessus du puits central (2) est composée d'au moins deux sections démontables (17, 18).

7. Dispositif selon l'une quelconque des revendications précédentes, **caractérisé en ce que** la tour (3) comprend un chemin de roulage (22) et en ce qu'elle est associée à un dispositif (6) d'amenée d'un tronçon de conduite sur la tour, ce dispositif comprenant un châssis allongé muni de roues (36) susceptibles de rouler d'une part sur le pont (4) du navire de pose et d'autre part sur ledit chemin de roulage (22).

8. Dispositif selon l'une quelconque des revendications précédentes, **caractérisé en ce que** la tour est associée à une table de travail (56) escamotable, inclinable avec elle, et capable de supporter le poids de la conduite immergée.

9. Procédé de pose de conduite tubulaire, **caractérisé en ce qu'**on utilise le dispositif selon l'une quelconque des revendications précédentes.

10. Procédé selon la revendication 9, **caractérisé en ce qu'**on utilise en pas-à-pas les deux chariots de serrage (30i, 30s) pour saisir et descendre successivement des tronçons (5) de conduite relativement rigide.

11. Procédé selon la revendication 10, **caractérisé en ce qu'**on remonte les deux chariots (30i, 30s) en haut de la tour (3) pour installer un connecteur (54) terminal en queue de ligne.

12. Procédé selon la revendication 9, **caractérisé en ce qu'**on utilise la roue (10) à pleine hauteur ou à mi-hauteur pour poser un flexible (70, 80), le cas échéant à l'aide de tensionneurs (81) adaptés sur la partie centrale inférieure (17) de la tour (3).

13. Procédé selon la revendication 9, **caractérisé en ce qu'**on utilise une partie (17) seulement de la tour (3) sur un navire conventionnel pour poser une conduite flexible.

## Patentansprüche

1. Vorrichtung zum Verlegen von Rohrleitungen, ausgehend vom Zentralschacht (2) eines Rohrleitungsverlegeschiffs bzw. Rohrverlegers, wobei die Vorrichtung einen neigbaren Turm (3), der innerhalb und im Wesentlichen in großer Höhe oberhalb der Ebene des Zentralschachts (2) angeordnet ist, um dort eine bestimmte zu verlegende Leitungslänge (5) aufzunehmen, und Rückhalt- und Versetzungselemente der Leitungslänge aufweist,
**dadurch gekennzeichnet, dass** die Elemente mindestens zwei mobile Wagen (30i, 30s) aufweisen, die entlang des gesamten Turms verlaufen, und in der Lage sind, Rückhaltelemente (35) der Rohrleitung aufzunehmen.

2. Vorrichtung nach Anspruch 1, **dadurch gekennzeichnet, dass** die Rückhaltelemente (35) der Rohrleitungen Klauenelemente zum Spannen sind.

3. Vorrichtung nach einem der vorhergehenden Ansprüche, **dadurch gekennzeichnet, dass** der Turm (3) zusätzliche Spannvorrichtungen (81) aufnehmen kann.

4. Vorrichtung nach einem der vorhergehenden Ansprüche, **dadurch gekennzeichnet, dass** der Turm (3) an seinem oberen Ende auf einer Konsole (11), die starr an dem Turm (3) befestigt ist, eine Umlenkrolle (10) mit flexibler Neigung aufweist.

5. Vorrichtung nach Anspruch 4, **dadurch gekennzeichnet, dass** die Konsole (11) verschiebbar auf dem Turm (3) angeordnet ist, und in verschiedenen Höhen festgestellt werden kann.

6. Vorrichtung nach einem der vorhergehenden Ansprüche, wobei die Höhe des Turms (3) oberhalb des Zentralschachts (2) aus mindestens zwei auswechselbaren Abschnitten (17, 18) besteht.

7. Vorrichtung nach einem der vorhergehenden Ansprüche, **dadurch gekennzeichnet, dass** der Turm (3) eine Schiene (22) aufweist und dass eine Anschlussvorrichtung (6) eines Leitungsabschnitts mit dem Turm verbunden ist, wobei diese Vorrichtung ein längliches Fahrgestell mit Rollen (36) aufweist, die einerseits auf der Brücke (4) des Rohrverlegers und andererseits auf der Schiene (22) rollen können.

8. Vorrichtung nach einem der vorhergehenden Ansprüche, **dadurch gekennzeichnet, dass** der Turm mit einem klappbaren Arbeitstisch (56) verbunden ist, der mit dem Turm geneigt werden kann, und das Gewicht der versenkten Leitung tragen kann.

9. Verfahren zum Verlegen von Rohrleitungen, **dadurch gekennzeichnet, dass** die Vorrichtung nach einem der vorhergehenden Ansprüche verwendet wird.

10. Verfahren nach Anspruch 9, **dadurch gekennzeichnet, dass** die beiden Spannwagen (30i, 30s) Schritt für Schritt verwendet werden, um die relativ starren Leitungsabschnitte (5) nach und nach zu erfassen und zu versenken.

11. Verfahren nach Anspruch 10, **dadurch gekennzeichnet, dass** die beiden Wagen (30i, 30s) wieder auf den Turm (3) gezogen werden, um eine Endverbindung (54) am Ende der Anordnung zu installieren.

12. Verfahren nach Anspruch 9, **dadurch gekennzeichnet, dass** die Rolle (10) ganz oben oder auf halber Höhe verwendet wird, um eine Schlauchleitung (70, 80) zu verlegen, gegebenenfalls mit Hilfe von Spannern (81), die auf dem unteren zentralen Teil (17) des Turms (3) angebracht sind.

13. Verfahren nach Anspruch 9, **dadurch gekennzeichnet, dass** nur ein Teil (17) des Turms (3) auf einem konventionellen Schiff verwendet wird, um eine flexible Leitung zu verlegen.

## Claims

1. Device for laying tubular pipes from the moon pool (2) of a laying vessel, the device comprising an inclinable tower (3) arranged in and essentially a great height above the level of the moon pool (2), designed to accommodate therein a certain length of pipe (5) to be laid, and means for holding and moving the said length of pipe,
**characterized in that** the said means comprise at least two moving carriages (30i, 30s) capable of travelling the said height of the tower and able to accommodate members (35) for holding the pipe.

2. Device according to Claim 1, **characterized in that** the pipe-holding members (35) are members with clamping jaws.

3. , Device according to any one of the preceding claims, **characterized in that** the tower (3) may accommodate additional tensioner devices (81).

4. Device according to any one of the preceding claims, **characterized in that** at its upper end, the tower (3) has a flexible return wheel (10) mounted on a bracket (11) immobilized on the tower (3).

5. Device according to Claim 4, **characterized in that** the bracket (11) is mounted so that it can be moved along the tower (3) and can be immobilized at different heights.

6. Device according to any one of the preceding claims, **characterized in that** the height of the tower (3) above the moon pool (2) being made up of at least two disassemblable sections (17, 18).

7. Device according to any one of the preceding claims, **characterized in that** the tower (3) comprises a runway (22) and in that it is associated with a device (6) for conveying a length of pipe onto the tower, this device comprising an elongate chassis equipped with wheels (36) capable of running, on the one hand, along the deck (4) of the laying vessel and, on the other hand, along the said runway (22).

8. Device according to any one of the preceding claims, **characterized in that** the tower is associated with a retractable table (56) that can be inclined with it, and which is capable of supporting the weight of the submerged pipe.

9. Method for laying tubular pipe, **characterized in that** use is made of the device according to any one of the preceding claims.

10. Method according to Claim 9, **characterized in that** the two clamping carriages (30i, 31) are used hand over hand to successively grip and lower lengths (5) of relatively rigid pipe.

11. Method according to Claim 10, **characterized in that** the two carriages (30i, 30s) are raised back up to the top of the tower (3) to install a connection end fitting (54) at the tail end of the line.

12. Method according to Claim 9, **characterized in that** the wheel (10) is used at full height or at mid height fcr laying a flexible pipe (70, 80), if necessary using tensioners (81) fitted to the lower central part (17) of the tower (3).

13. Method according to Claim 9, **characterized in that** just part (17) of the tower (3) is used on a conventional vessel for laying a flexible pipe.
